(19) Europäisches Patentamt

European Patent Office

Office européen des brevets

(11) Veröffentlichungsnummer: **0 318 846 B1**

(12) **EUROPÄISCHE PATENTSCHRIFT**

(45) Veröffentlichungstag der Patentschrift: **19.08.92**

(21) Anmeldenummer: **88119636.4**

(22) Anmeldetag: **25.11.88**

(51) Int. Cl.⁵: **B29C 67/22**, B29C 47/00, C08J 9/12, //B29K25:00, B29K105:04

(54) **Verfahren zur Herstellung von Schaumstoffen mit hoher Druckfestigkeit.**

(30) Priorität: **04.12.87 DE 3741095**

(43) Veröffentlichungstag der Anmeldung:
**07.06.89 Patentblatt 89/23**

(45) Bekanntmachung des Hinweises auf die Patenterteilung:
**19.08.92 Patentblatt 92/34**

(84) Benannte Vertragsstaaten:
**BE DE FR GB IT NL**

(56) Entgegenhaltungen:
**WO-A-86/06084**
**DE-A- 1 504 278**
**US-A- 3 194 854**

(73) Patentinhaber: **BASF Akfiengesellschaft**
**Carl-Bosch-Strasse 38**
**W-6700 Ludwigshafen(DE)**

(72) Erfinder: **Weber, Reinhold**
**An der Steinernen Bruecke 11**
**W-6704 Mutterstadt(DE)**
Erfinder: **Weilbacher, Manfred, Dr.**
**Taunusstrasse 27**
**W-6710 Frankenthal(DE)**
Erfinder: **Tatzel, Hermann**
**Hoelderlinstrasse 15**
**W-6945 Hirschberg(DE)**
Erfinder: **Zuern, Ludwig, Dr.**
**Halsbergstrasse 2 a**
**W-6702 Bad Duerkheim(DE)**
Erfinder: **Zettler, Hans Dieter**
**Bueckelhaube 23**
**W-6718 Gruenstadt(DE)**
Erfinder: **Hinselmann, Klaus**
**Robert-Koch-Strasse 25**
**W-6704 Mutterstadt(DE)**

EP 0 318 846 B1

# EP 0 318 846 B1

**Beschreibung**

Extrudierte Polystyrolschäume haben auf dem Dämmstoffmarkt eine große Bedeutung erreicht. Die Produkte zeichnen sich durch sehr geringe Wasseraufnahme und ausgezeichnetes Dämmvermögen aus. Zum Schäumen werden üblicherweise physikalische Treibmittel verwendet, insbesondere Fluorchlorkohlenwasserstoffe, die im Schaumstoff meistens sehr gut eingeschlossen sind und als Schwergas eine wichtige Rolle spielen. Neben den Fluorchlorkohlenwasserstoffen werden häufig noch zusätzliche Treibmittel wie beispielsweise Methylchlorid, Ethylchlorid oder Butan eingesetzt, die sich beim Extrudieren hilfreich erwiesen haben.

Besonders geeignete Fluorchlorkohlenwasserstoffe sind Difluordichlormethan und andere vollhalogenierte Kohlenwasserstoffe, wie z.B. Dichlortetrafluorethan. Diese Substanzen sind außerordentlich stabil und nicht toxisch, sie haben aber den Nachteil, daß sie sich in der Atmosphäre anreichern und infolge ihrer außerordentlich großen Beständigkeit bis in die höheren Gasschichten gelangen und dort in Reaktion mit der schützenden Ozonschicht treten können. Da sich dies auf die Einstrahlung an der Erdoberfläche ungünstig auswirken kann, gibt es seit längerem Bestrebungen, den Einsatz derartiger vollhalogenierter, langlebiger Fluorkohlenwasserstoffe zu beschränken.

Es hat nicht an Versuchen gefehlt, anstelle von Fluorkohlenwasserstoffen andere Gase als Treibmittel zu verwenden. Die Verwendung von Methylchlorid führt zu Schaumstoffen, die bei der Lagerung relativ stark schrumpfen. Bei Verwendung von Ethylchlorid ist die Druckfestigkeit des Schaumstoffs unbefriedigend. Kohlendioxid führt zu Schaumstoffen, die einen hohen Anteil an offenen Zellen und damit verbunden ein hohes Wasseraufnahmevermögen aufweisen. Auch bei Verwendung der in der WO 86/06084 beschriebenen Treibmittelmischungen aus 3 - 45 Gew.% Kohlendioxid, 5 - 97 Gew.% Ethylchlorid und 0 - 90 Gew.% Fluorchlorkohlenwasserstoffen ist die Druckfestigkeit des Schaumstoffs unbefriedigend. Aufgabe der vorliegenden Erfindung war es, diese Nachteile zu vermeiden und Polystyrolschaumstoffe herzustellen, die nur ein geringes Schrumpfverhalten, eine hohe Druckfestigkeit und ein geringes Wasseraufnahmevermögen aufweisen.

Es wurde nun überraschenderweise gefunden, daß diese Aufgabe gelöst wird, wenn man als Treibmittel Kohlendioxid, gegebenenfalls unter Mitverwendung von gasförmigen Kohlenwasserstoffen oder Halogenkohlenwasserstoffen verwendet und wenn man das Styrolpolymerisat-Treibmittel-Gemisch in eine Zone mit einem Überdruck von 0,1 bis 2 bar extrudiert und den Schaumstoff unter diesem Druck verfestigen läßt.

Gegenstand der Erfindung ist somit ein Verfahren zur Herstellung von Schaumstoffen mit hoher Druckfestigkeit durch Extrusion eines Gemisches aus einem Styrolpolymerisat und 3 bis 9 Gew.%, bezogen auf das Styrolpolymerisat eines Treibmittels aus

a) 80 bis 100 Gew.% Kohlendioxid und

b) 0 bis 20 Gew.% mindestens eines bei Raumtemperatur gasförmigen Kohlenwasserstoffes oder Halogenkohlenwasserstoffs

sowie gegebenenfalls üblichen Zusatzstoffen,
wobei man in eine Zone mit einem Überdruck von 0,1 bis 2 bar extrudiert und den Schaumstoff unter diesem Druck verfestigen läßt.

Läßt man den Schaumstoff in einer Zone erhöhten Drucks expandieren, so beeinflußt dieser erhöhte Druck gleichzeitig in vorteilhafter Weise das Raumgewicht des Schaumstoffs. Je höher der Druck, desto höher ist das Raumgewicht. Auf diese Weise können auch bei alleiniger Verwendung von Kohlendioxid als Treibmittel Schaumstoffe mit guten Gebrauchseigenschaften erhalten werden.

Zur Erniedrigung des Raumgewichts ist es empfehlenswert, neben Kohlendioxid geringe Mengen an bei Raumtemperatur gasförmigen Kohlenwasserstoffen oder Halogenkohlenwasserstoffen mitzuverwenden. Es ist empfehlenswert, die Menge an den genannten Zusatztreibmitteln möglichst niedrig zu halten, um die Umweltbelastung zu verringern.

Aus der DE-A-15 04 278 geht ein Verfahren zur Herstellung von Formteilen aus gasbildende Stoffe enthaltenden thermoplastischen Kunststoffen hervor, bei dem die Schmelze aus der Düse als fertiger Strang extrudiert oder in den Hohlraum einer Form gespritzt wird, wobei die Schmelze unmittelbar nach ihrem Austritt aus der Düse gegen ein im formgebenden Raum aufgebautes, in seiner Druckhöhe einstellbares Luft- oder Gas-Druckpolster gedrückt wird, das unter dem Gegendruck der Schmelze aus dem Raum zum Entweichen gebracht wird.

Nach diesem Verfahren sollen Formteile erhalten werden, die eine gute Oberfläche haben, also beispielsweise keine Schuppen oder Blasen an der Oberfläche von im Spritzguß- oder Extrusionsverfahren hergestellten Teilen aufweisen. Darüberhinaus wird das Ausgasen von flüchtigen Bestandteilen aus der plastischen Masse bzw. die Blasenbildung in der Fließfront der Masse vermieden. Bei der Verwendung von Treibmitteln werden völlig poren- und schuppenfreie Oberflächen erzielt, während die Formteile im Innern ein feinporiges Gefüge zeigen.

In der DE-A-15 04 278 finden sich jedoch keine Hinweise auf ein geringes Schrumpfverhalten, eine hohe Druckbeständigkeit und eine geringe Wasseraufnahme der nach diesem Verfahren erhaltenen Formkörper.

Styrolpolymerisate im Sinne dieser Erfindung sind Polystyrol und Mischpolymerisate des Styrols, die mindestens 50 Gew.% Styrol einpolymerisiert enthalten. Als Comonomere kommen z.B. in Betracht $\alpha$-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Als Treibmittel wird Kohlendioxid oder ein Gemisch aus Kohlendioxid und bis zu 20 Gew.% mindestens eines bei Raumtemperatur gasförmigen Kohlenwasserstoffs oder Halogenkohlenwasserstoffs verwendet. Geeignete Kohlenwasserstoffe sind z.B. Propan, Butan und iso-Butan. Geeignete Halogenkohlenwasserstoffe sind z.B. Methylchlorid, Ethylchlorid, Dichlordifluormethan, Monochlordifluormethan, Dichlortetrafluorethan und Monochlortrifluormethan. Die Zusatztreibmittel weisen vorzugsweise einen Siedepunkt zwischen -50 und +15°C auf.

Das Treibmittel(gemisch) wird in einer Menge von 3 bis 9 Gew.%, bezogen auf das Styrolpolymerisat, verwendet.

Als übliche Zusatzstoffe können dem Styrolpolymerisat-Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Herstellung der Schaumstoffe erfolgt in an sich bekannter Weise durch Extrusion. In einem Extruder wird das durch Erwärmen plastifizierte Styrolpolymerisat mit dem Treibmittel und gegebenenfalls den Zusatzstoffen innig vermischt. Das Gemisch durchläuft sodann eine Beruhigungszone, in der es unter ständigem Rühren auf eine Temperatur etwa zwischen 100 und 120°C gekühlt und anschließend durch eine Düse, die etwa eine Breite von 1/3 bis 1/2 der gewünschten Formteilbreite aufweist, zu Formteilen, insbesondere zu Platten extrudiert wird.

Wesentliches Merkmal des Verfahrens gemäß vorliegender Erfindung ist es, das Gemisch in eine Zone mit einem Überdruck von 0,1 bis 2 bar, vorzugsweise 0,3 bis 1,8 bar, insbesondere 0,4 bis 1,6 bar zu extrudieren und den Schaumstoff unter diesem Druck verfestigen zu lassen. Man extrudiert also das Styrolpolymerisat-Treibmittel-Gemisch in eine unter einem Überdruck von 0,1 bis 2 bar stehende Kammer, in der entweder der anzuwendende Druck weitgehend konstant gehalten wird oder in der der Druck während des Durchlaufens des Schaumstoffs sich allmählich erniedrigt. Der Überdruck in der Kammer wird durch Aufdrücken eines Inertgases oder Inertgasgemisches (z.B. $N_2$, Edelgas, $CO_2$, ggf. Luft) erzeugt. Während der Aufschäumphase wird der vorgewählte Überdruck mittels Regelventil konstant gehalten. Im Vergleich zu einem Extrudieren des Gemisches in einen unter Normaldruck stehenden Raum schäumt das Gemisch im Druckraum gebremst und damit langsamer und weniger stark auf. Ein Aufreißen der Poren unter Bildung von offenen Zellen wird dadurch wirksam verhindert.

Beim Eintritt in die Druckkammer wird das aufschäumende Gemisch durch geeignete Formgebungselemente zu dem gewünschten Formteilquerschnitt verformt. Bei der Herstellung von Plattenbahnen erfolgt diese Formgebung vorteilhaft durch eine Serie von Führungsrollen, wie sie beispielsweise aus der US-Patentschrift 4 234 529 bekannt sind. Der Schaumstoff wird anschließend so lange unter erhöhtem Druck gehalten, bis er sich verfestigt hat. Dies kann beispielsweise dadurch erfolgen, daß der Schaumstoff mit Wasser gekühlt wird oder er durchläuft eine längere Verweilstrecke in der er sich durch die kältere Umgebungsatmosphäre von alleine abkühlt. Die Schaumstoffbahn kann innerhalb der Druckkammer zu Platten zerschnitten werden und die einzelnen Platten werden sodann über eine Schleuse ausgetragen.

Man kann die Schaumstoffbahn aber auch vorteilhaft durch ein Wasserbad in Form eines langgestreckten Bogens führen, wobei der Druck in den einzelnen Bereichen dieser mit Wasser gefüllten Druckzone jeweils durch die Höhe der darauf lastenden Flüssigkeitssäule bestimmt ist.

Die nachstehenden Beispiele erläutern die bevorzugten Ausführungsformen des erfindungsgemäßen Verfahrens. Die Teile sind jeweils Gewichtsteile.

Beispiele 1 a bis c

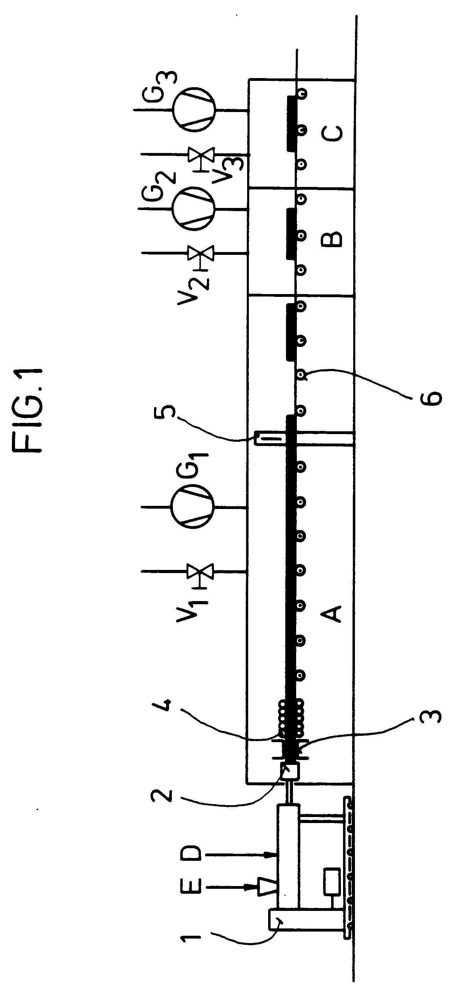

Die Versuchsvorrichtung ist in Fig. 1 dargestellt.

100 Teile Polystyrol mit einem Schmelzindex von 5,0, 1,5 Teile Hexabromcyclododecan und 0,3 Teile Talkum zur Regelung der Zellgröße wurden kontinuierlich einem Extruder (1) über die Öffnung (E) mit einem inneren Schneckendurchmesser von 120 mm zugeführt.

3

Durch eine an dem Extruder angebrachte Einlaßöffnung (D) wurde kontinuierlich ein aus 7,2 Teilen $CO_2$ und 1,6 Teilen Dichlordifluormethan (F12) bestehendes Treibmittelgemisch in den Extruder eingedrückt. Das in dem Extruder homogenisierte Gel wurde dann innerhalb von 25 Min. auf eine Austrittstemperatur von ca. 110°C gekühlt und durch eine 300 mm breite und 2,0 mm weite Düse (2) in einen 50 m langen Raum (A) höheren Druckes als Atmosphärendruck extrudiert. Der Gasdruck im Raum "A" lag bei 0,5 bar (Beispiel 1 a) bzw. 1,5 bar (Beispiel 1 b). Der Schaum wurde dann durch eine mit dem Extruder verbundene Führvorrichtung (3) mit Hilfe der Abzugseinrichtung (4) geführt, wobei eine geschäumte Polystyrolplatte mit einer Querschnittsfläche von 500 x 70 mm entstand. Diese Platte wurde dann der Ablängeinheit (5) zugeführt und dort in 2500 mm lange Stücke geschnitten. Diese Abschnitte wurden über die Rollenbahn (6) zur Ausschleusstation (B) und (C) transportiert. Über die Druckhaltestationen $(V_1 + G_1)$ $(V_2 + G_2)$ und $(V_3 + G_3)$ werden die gewünschten Gasdrucke in den Kammern (A), (B) und (C) eingestellt. Im Beispiel 1 c wurden als Treibmittel 8 Teile $CO_2$ verwendet. Der Gasdruck im Raum (A) lag bei 0,9 bar.

Die Proben wurden 30 Tage gelagert und dann geprüft. In der Tabelle sind die Prüfdaten der Beispiele aufgelistet.

Beispiel 2

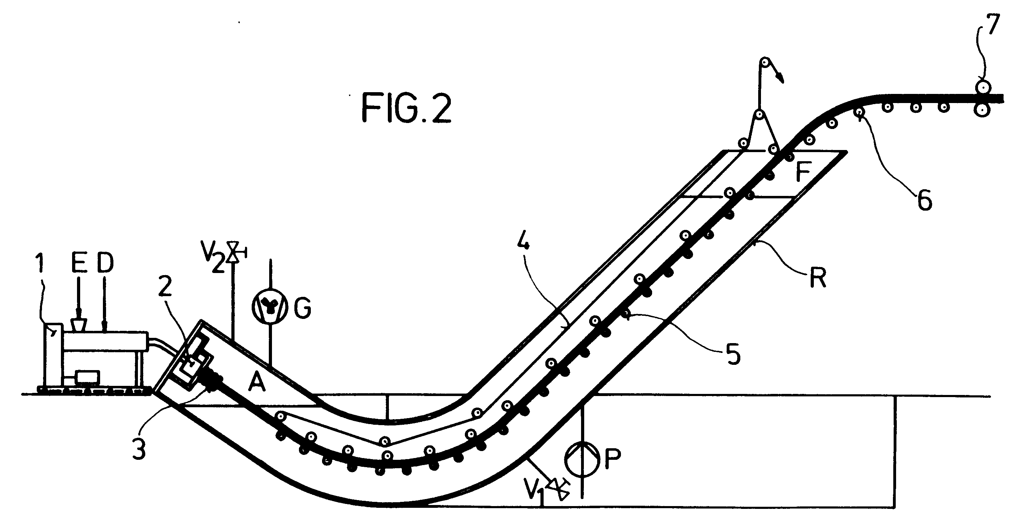

Die Versuchsvorrichtung ist in Fig. 2 dargestellt.

Die 100 Teile Polystyrol mit einem Schmelzindex von 5,0, 1,5 Teile Hexabromcyclododecan und 0,15 Teile Talkum zur Regelung der Zellgröße wurden einem Extruder (1) über die Einlaßöffnung (E) mit einem inneren Schneckendurchmesser von 120 mm zugeführt.

Durch eine an dem Extruder angebrachte Einlaßöffnung (D) wurde ein aus 1,5 Teilen Dichlordifluormethan (F12) und 7,5 Teilen $CO_2$ bestehendes Treibmittelgemisch in den Extruder eingedrückt.

Das in dem Extruder homogenisierte Gel wurde dann innerhalb von 20 Minuten auf eine Austrittstemperatur von 106°C gekühlt und durch eine 280 mm breite und 1,5 mm weite Düse (2) in einen Raum höheren Druckes (A) als Atmosphärendruck extrudiert. Der Gasdruck in Raum (A) wird über (V2) und (G) des Druckhaltesystems und durch den eingepreßten Flüssigkeitsstand (F) in dem 20 m hohen Rohr (R) mittels der Pumpe (P) eingestellt. Der Schaum wurde dann durch eine mit dem Extruder verbundene Führvorrichtung (3), wie im US-Patent 4 234 529 beschrieben, geführt, wobei ein geschäumtes Polystyrolband mit einer Querschnittsgröße von 600 x 50 mm² entstand. Mittels des Rollenbandes (5) und des Gummibandes (4) wurde das Polystyrolschaumband aus dem Rohr (R) geführt. Die Abzugseinrichtung (7) führte das Band der Ablängeinrichtung zu. Nach 30 Tagen Lagerzeit wurden die Platten geprüft. In der Tabelle sind die Prüfwerte aufgelistet.

Beispiel 3

Die Versuchsdurchführung erfolgte ähnlich wie in Beispiel 1.

80 Teile Polystyrol mit einem Schmelzindex von 5,0 und 20 Teile eines Styrol-Mischpolymerisates, das 5 % Acrylnitril enthält, sowie 2 Teile Hexabromcyclododecan und 0,25 Teile eines Gemisches aus Magnesiumsilikat und Aluminiumstearat (Verhältnis 4:1) zur Zellgrößensteuerung wurden kontinuierlich einem Einschneckenextruder zugeführt.

In den Plastifizierungsbereich des Extruders wurde unter einem Druck von 200 bar mit Hilfe eines Dosieraggregates kontinuierlich ein Treibmittelgemisch bestehend aus 7,5 Teilen Kohlendioxid und 1,5 Teilen Dichlordifluormethan zugeführt.

Das Treibmittel-Polymer-Gemisch wurde im Extruder auf 108°C abgekühlt und durch eine 300 mm breite und 1,8 mm weite Düse in einen 45 m langen Raum, der unter einem Überdruck von 1,5 bar stand, extrudiert.

Der Überdruck wurde durch ein im Kreis geführtes Gas bestehend aus 90 Teilen Stickstoff, 6 Teilen Kohlendioxid und 4 Teilen Dichlordifluormethan bewerkstelligt. Der Überdruck wurde mittels Regelventil konstant gehalten. Der sich einstellende $CO_2$- und $F_{12}$-Partialdruck bewirkte eine zusätzliche Bremsung der Aufschäumgeschwindigkeit (bzw. des Aufschäumvorganges) und führte zu einem gegen Druckbelastung stabileren Schaumgefüge und zu einer Zurückdrängung der Offenzelligkeit.

Während des Durchlaufens der in 3 Kammern aufgeteilten Verweilstrecke wurde nach Beendigung der Schaumstabilisierungsphase der äußere Überdruck kontinuierlich abgesenkt.

Die während der Abkühlphase sich verfestigende Schaumbahn wurde zu einzelnen Platten abgelängt. Die Prüfdaten des erhaltenen Schaumstoffs sind in der Tabelle aufgeführt.

Vergleichsbeispiele A, B, C

Man arbeitete wie in Beispiel 1, als Treibmittel wurden 14 Teile Dichlordifluormethan (F12) bzw. 9 Teile $CO_2$ verwendet. In Beispiel A wurde der Druck im Raum A auf 0,9 bar eingestellt, in den Beispielen B und C wurde drucklos gearbeitet. Die Prüfdaten der erhaltenen Proben sind in der Tabelle aufgeführt.

Tabelle: Meßergebnisse nach einer Lagerungsdauer von 30 Tagen

| | Durch-satz kg/h | Treib-mittel-art u. Mischungs-verhältnis | Treib-mittel-menge Gew.% | Gegen-druck bar | Platten-dicke mm | Dichte DIN 53 420 kg/m³ | Zellen-zahl Z/mm | Offen-zellig-keit ISO/DIS 4590 % |
|---|---|---|---|---|---|---|---|---|
| Bsp. 1 a | 650 | $CO_2$/F 12 4 : 1 | 9 | 0,5 | 70 | 34 | 4 | 3,5 |
| Bsp. 1 b | 650 | $CO_2$/F 12 4 : 1 | 9 | 1,5 | 70 | 45 | 6 | 1,5 |
| Bsp. 1 c | 500 | $CO_2$ | 8 | 0,9 | 40 | 38 | 3 | 8 |
| Bsp. 2 | 650 | $CO_2$/F 12 5 : 1 | 8,5 | 0,6 | 50 | 37 | 4,5 | 4,5 |
| Bsp. 3 | 650 | $CO_2$/F 12 5 : 1 | 9 | 1,5 | 80 | 43 | 6 | 1,0 |
| Vergleich A | 600 | F 12 | 14 | 0,9 | 40 | 42 | 7 | 0,5 |
| Vergleich B | 600 | F 12 | 14 | 0 | 40 | 33 | 5 | 3,0 |
| Vergleich C | 600 | $CO_2$ | 9 | 0 | 40 | 32 | 2 | 32 |

Forts. Tabelle: Meßergebnisse nach einer Lagerungsdauer von 30 Tagen

| | Wasseraufnahme DIN 53 433 Gew.% | Wärmeleitfähigkeit DIN 52 612 W/m.K | Druckfestigkeit DIN 53 577 N/mm² | Wärmeformbeständigkeit DIN 53 462 Vol.% |
|---|---|---|---|---|
| Bsp. 1 a | 0,12 | 0,032 | 0,38 | + 1,0 |
| Bsp. 1 b | 0,10 | 0,032 | 0,45 | + 1,0 |
| Bsp. 1 c | 0,25 | 0,0395 | 0,36 | + 0,8 |
| Bsp. 2 | 0,15 | 0,036 | 0,39 | + 0,9 |
| Bsp. 3 | 0,07 | 0,032 | 0,48 | + 1,0 |
| Vergleich A | 0,06 | 0,024 | 0,42 | + 7,5 |
| Vergleich B | 0,13 | 0,027 | 0,28 | + 6,5 |
| Vergleich C | 5,6 | 0,046 | 0,30 | 0,5 |

**Patentansprüche**

1. Verfahren zur Herstellung von Schaumstoffen mit hoher Druckfestigkeit durch Extrusion eines Gemisches aus einem Styrolpolymerisat und 3 bis 9 Gew.%, bezogen auf das Styrolpolymerisat, eines Treibmittels aus
a) 80 bis 100 Gew.% Kohlendioxid und
b) 0 bis 20 Gew.% mindestens eines bei Raumtemperatur gasförmigen Kohlenwasserstoffes oder Halogenkohlenwasserstoffs
sowie gegebenenfalls üblichen Zusatzstoffen, wobei man das Gemisch in eine Zone mit einem Überdruck von 0,1 bis 2 bar extrudiert und den Schaumstoff unter diesem Druck verfestigen läßt.

2. Verfahren nach Anspruch 1, dadurch gekennzeichnet, daß Treibmittelkomponente b) einen Siedepunkt zwischen -50 und +15°C aufweist.

**Claims**

1. A process for the preparation of a foam having high compressive strength by extrusion of a mixture of a styrene polymer and from 3 to 9% by weight, based on the styrene polymer, of a blowing agent consisting of
a) from 80 to 100% by weight of carbon dioxide and
b) from 0 to 20% by weight of one or more halohydrocarbons or hydrocarbons which are gaseous at room temperature,
with or without conventional additives, wherein the mixture is extruded into a zone under from 0.1 to 2 bar gage pressure and the foam is allowed to stabilize under this pressure.

2. A process as claimed in claim 1, wherein blowing agent component b) has a boiling point of from -50 to +15°C.

**Revendications**

1. Procédé de fabrication de matières alvéolaires à haute résistance à la pression, par extrusion d'un mélange d'un polymérisat de styrène, et de 3 à 9 % en poids, rapporté au polymérisat de styrène, d'un gonflant constitué de :
a) 80 à 100 % en poids d'anhydride carbonique et
b) 0 à 20 % en poids d'au moins un carbure d'hydrogène ou carbure d'hydrogène halogéné gazeux à la température ambiante, ainsi que, éventuellement des additifs usuels, le mélange étant extrudé dans une zone à surpression de 0,1 à 2 bar et la matière alvéolaire étant solidifié sous cette pression.

2. Procédé selon la revendication 1, caractérisé en ce que le composant b) du gonflant présente un point d'ébullition compris entre -50 et +15 degrés C.

# FIG.1

EP 0 318 846 B1

FIG.2

EP 0 318 846 B1